# EUROPEAN PATENT APPLICATION

(11) **EP 4 738 166 A1**
(43) Date of publication of application: **06.05.2026**
(21) Application number: 24868526.5
(22) Date of filing: 02.09.2024
(51) Int. Cl.: G06F 21/60, G06F 21/42, G06F 21/62, G16Y 30/10, H04L 9/06

(54) **ELECTRONIC DEVICE AND METHOD FOR CONTROLLING ELECTRONIC DEVICE**

(30) Priority: 19.09.2023 KR 20230124589
(71) Applicant: Samsung Electronics Co., Ltd., Suwon-si, Gyeonggi-do 16677 (KR)
(72) Inventor: CHAPAYEV, Eugene, Kyiv, 01032 (UA); TATARINOVA, Yuliia, Kyiv, 01032 (UA); ASTRAKHANTSEV, Andrii, Kyiv, 01032 (UA); VOLOBUIEV, Kostiantyn, Kyiv, 01032 (UA); GRYSHCHENKO, Sergii, Kyiv, 01032 (UA)
(74) Representative: Appleyard Lees IP LLP
(86) International application number: PCT/KR2024/013173
(87) International publication number: WO 2025/063547

(57) **Abstract**

An electronic device and a method for controlling the electronic device are disclosed. Specifically, the electronic device may include: at least one sensor; a communication unit; a memory storing at least one instruction; and a processor for executing the at least one instruction, wherein the processor: when a request for access to a first type of sensor is received from an external device through the communication unit, identifies whether the first type of sensor is included in the at least one sensor; when the first type of sensor is identified to be included in the at least one sensor, performs authentication for allowing the external device to access the first type of sensor; blocks other applications remaining after excluding at least one application related to access to the first type of sensor by the external device from among multiple applications of the electronic device and other devices remaining after excluding the external device from accessing the first type of sensor; establishes a security channel for communication with the external device by using encryption information; and when sensing data is obtained through the first type of sensor, controls the communication unit to transmit information on the sensing data to the external device through the established security channel.

## Description

### [Technical Field]

The present disclosure relates to an electronic apparatus and a method for controlling the electronic apparatus, and more particularly, to an electronic apparatus capable of transmitting, to an external device, information on sensing data obtained from a sensor, and a method for controlling the electronic apparatus.

### [Background Art]

In recent years, the number of sensors included in various electronic apparatuses has rapidly increased together with the development of devices such as smartphones and smartwatches. In addition, the connectivity and usability among Internet of Things (IoT) apparatuses have been enhanced as technologies related to the IoT have rapidly advanced in recent years.

However, the types and numbers of sensors mounted on each apparatus included in an IoT network may be limited, and the types of sensors included in each apparatus may be different from one another. Accordingly, research has been continuously conducted on technologies for enabling one apparatus included in the IoT network to efficiently and stably utilize functions of sensors included in another device.

However, conventional technologies have mainly focused on remote access through interconnection between apparatuses, and even when access to sensors themselves is supported, such support has been limited to certain sensors such as humidity sensors or temperature sensors.

Meanwhile, although conventional technologies related to use of functions of sensors included in another device by one apparatus exist, it is difficult to enable one apparatus to access sensors included in another device in a seamless manner that enhances overall functions and security.

### [Disclosure of Invention]

### [Solution to Problem]

The present disclosure provides an electronic apparatus capable of stably and exclusively transmitting information on sensing data to an external device while protecting personal information through a security channel, and a method for controlling the same.

According to an embodiment of the present disclosure, provided is an electronic apparatus including: at least one sensor; a communication unit; a memory storing at least one instruction; and a processor configured to execute the at least one instruction, wherein the processor is configured to: identify whether a first type of sensor is included in the at least one sensor when a request for access to the first type of sensor is received from an external device through the communication unit; perform authentication for allowing the external device to access the first type of sensor when the first type of sensor is identified as being included in the at least one sensor; block another application excluding at least one application related to access to the first type of sensor by the external device from among a plurality of applications of the electronic apparatus and another device excluding the external device from accessing the first type of sensor; establish a security channel for communication with the external device by using encryption information; and control the communication unit to transmit, to the external device through the established security channel, information on sensing data when the sensing data is obtained from the first type of sensor.

The information on the sensing data may include at least one of the sensing data, processed data obtained from the sensing data, an analysis result of the sensing data, or control information for performing an operation related to the sensing data.

The processor may be configured to: identify whether personal information is included in the sensing data; obtain the processed data obtained from the sensing data by converting the sensing data not to include the personal information when the personal information is identified as being included in the sensing data; and control the communication unit to transmit, to the external device through the established security channel, the processed data among the information on the sensing data.

The processor may be configured to: obtain the analysis result of the sensing data; and control the communication unit to transmit, to the external device through the established security channel, the analysis result among the information on the sensing data.

The processor may be configured to: obtain the control information based on the analysis result; and control the communication unit to transmit, to the external device through the established security channel, the control information among the information on the sensing data.

The processor may be configured to: receive, through the communication unit, the request for access from a hub apparatus for managing an Internet of Things (IoT) network including the electronic apparatus and the external device; and identify whether the first type of sensor is included in the at least one sensor by receiving, from the hub apparatus through the communication unit, information indicating that the first type of sensor is included in the at least one sensor.

The encryption information may include an asymmetric cipher for setting a session key related to establishment of the security channel and a symmetric block cipher for encrypting and decrypting the information on the sensing data.

The processor may be configured to: control the communication unit to transmit, to the external device, a message indicating that the first type of sensor is not included in the electronic apparatus when the first type of sensor is identified as not being included in the at least one sensor.

The processor may be configured to: control the communication unit to transmit, to another external device, a message indicating that the request for access to the first type of sensor is blocked when access to the first type of sensor is blocked and the request for access to the first type of sensor is subsequently received from the another device.

The electronic apparatus may further include an output unit, wherein the processor may be configured to: control the output unit to output a message indicating that the request for access to the first type of sensor is blocked when access to the first type of sensor is blocked and the request for access to the first type of sensor is subsequently received from the another application.

According to an embodiment of the present disclosure, provided is a method for controlling an electronic apparatus, the controlling method including: receiving a request for access to a first type of sensor from an external device; identifying whether the first type of sensor is included in at least one sensor; performing authentication for allowing the external device to access the first type of sensor when the first type of sensor is identified as being included in the at least one sensor; blocking another application excluding at least one application related to access to the first type of sensor by the external device from among a plurality of applications of the electronic apparatus and another device excluding the external device from accessing the first type of sensor; establishing a security channel for communication with the external device by using encryption information; and transmitting, to the external device through the established security channel, information on sensing data when the sensing data is obtained from the first type of sensor.

The information on the sensing data may include at least one of the sensing data, processed data obtained from the sensing data, an analysis result of the sensing data, or control information for performing an operation related to the sensing data.

The controlling method may further include: identifying whether personal information is included in the sensing data; obtaining the processed data obtained from the sensing data by converting the sensing data not to include the personal information when the personal information is identified as being included in the sensing data; and transmitting, to the external device through the established security channel, the processed data among the information on the sensing data.

The controlling method may further include: obtaining the analysis result of the sensing data; and transmitting, to the external device through the established security channel, the analysis result among the information on the sensing data.

The controlling method may further include: obtaining the control information based on the analysis result; and transmitting, to the external device through the established security channel, the control information among the information on the sensing data.

The receiving of the request for access may include receiving the request for access from a hub apparatus for managing an Internet of Things (IoT) network including the electronic apparatus and the external device; and the identifying of whether the first type of sensor is included may include identifying whether the first type of sensor is included in the at least one sensor by receiving, from the hub apparatus through the communication unit, information indicating that the first type of sensor is included in the at least one sensor.

The encryption information may include an asymmetric cipher for setting a session key related to establishment of the security channel and a symmetric block cipher for encrypting and decrypting the information on the sensing data.

The controlling method may further include: transmitting, to the external device, a message indicating that the first type of sensor is not included in the electronic apparatus when the first type of sensor is identified as not being included in the at least one sensor.

The controlling method may further include: transmitting, to another external device, a message indicating that the request for access to the first type of sensor is blocked when access to the first type of sensor is blocked and the request for access to the first type of sensor is subsequently received from the another device.

According to an embodiment of the present disclosure, provided is a non-transitory computer-readable recording medium including a program for executing a method for controlling an electronic apparatus, wherein the controlling method includes: receiving a request for access to a first type of sensor from an external device; identifying whether the first type of sensor is included in at least one sensor; performing authentication for allowing the external device to access the first type of sensor when the first type of sensor is identified as being included in the at least one sensor; blocking another application excluding at least one application related to access to the first type of sensor by the external device from among a plurality of applications of the electronic apparatus and another device excluding the external device from accessing the first type of sensor; establishing a security channel for communication with the external device by using encryption information; and transmitting, to the external device through the established security channel, information on sensing data when the sensing data is obtained from the first type of sensor.

### [Brief Description of Drawings]

FIG. 1 is a block diagram briefly illustrating a configuration of an electronic apparatus according to at least one embodiment of the present disclosure;
FIG. 2 is a flowchart briefly illustrating a method for controlling the electronic apparatus according to at least one embodiment of the present disclosure;
FIG. 3 is a flowchart illustrating various embodiments related to a method for obtaining and transmitting information on sensing data;
FIG. 4 is a diagram illustrating an embodiment for transmitting the sensing data itself;
FIG. 5 is a diagram illustrating an embodiment for transmitting an analysis result of the sensing data;
FIG. 6 is a diagram illustrating an embodiment for transmitting processed data obtained from the sensing data;
FIG. 7 is a block diagram illustrating a detailed configuration of the electronic apparatus according to at least one embodiment of the present disclosure; and
FIG. 8 is a sequence diagram illustrating an embodiment for identifying a sensor through a hub apparatus.

### [Mode for Invention]

The present disclosure may be variously modified and have several embodiments, and specific embodiments of the present disclosure are thus illustrated in the accompanying drawings and described in detail in the specification. However, it should be understood that the scope of the present disclosure are not limited to specific embodiments, and include all modifications, equivalents, and alternatives according to an embodiment of the present disclosure. Throughout the accompanying drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe the specific embodiments rather than limit the scope of the present disclosure. A term of a singular number may include its plural number unless explicitly indicated otherwise in the context.

In the present disclosure, the expression such as "have", "may have", "include", or "may include", indicates the presence of a corresponding feature (e.g., a numerical value, a function, an operation, or a component such as a part), and does not exclude the presence of an additional feature.

In the present disclosure, the expression such as "A or B", "least one of A and/or B", or "one or more of A and/or B" may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions such as "first" and "second", used in the present disclosure, may indicate various components regardless of the sequence and/or importance of the components. These expressions are only used to distinguish one component and another component from each other, and do not limit the corresponding components.

When any component (e.g., a first component) is mentioned to be "(operatively or communicatively) coupled with/to" or "connected to" another component (e.g., a second component), it should be understood that the any component is directly coupled to another component or may be coupled to another component through yet another component (e.g., a third component).

On the other hand, when any component (e.g., the first component) is mentioned to be "directly coupled with/to" or "directly connected to" another component (e.g., the second component), it should be understood that yet another component (e.g., the third component) is not present between any component and another component.

An expression such as "configured (or set) to", used in the present disclosure, may be replaced by an expression such as "suitable for", "having the capacity to", "designed to", "adapted to", "made to", or "capable of", depending on a context. The expression "configured (or set) to" does not necessarily indicate "specifically designed to" in terms of hardware.

Instead, the expression "a device configured to", in any context, may indicate that the device may "perform~" together with another device or component. For example, a "processor configured (or set) to perform A, B, and C" may indicate a dedicated processor (e.g., an embedded processor) that may perform the corresponding operations or a generic-purpose processor (e.g., a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor except for a "module" or a "part" that needs to be implemented by specific hardware.

Meanwhile, various elements and regions in the drawings are schematically illustrated. Therefore, the spirit of the present disclosure is not limited by relative sizes or intervals illustrated in the accompanying drawings.

Hereinafter, an embodiment of the present disclosure is described in detail with reference to the accompanying drawings so that those skilled in the art to which the present disclosure pertains may easily practice the present disclosure.

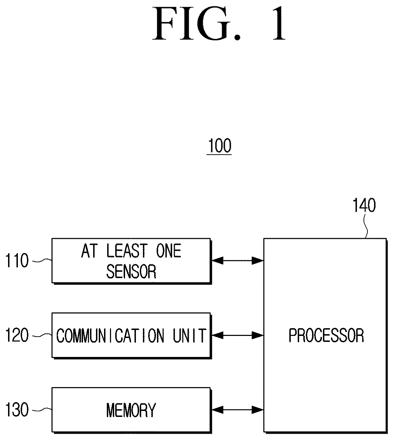

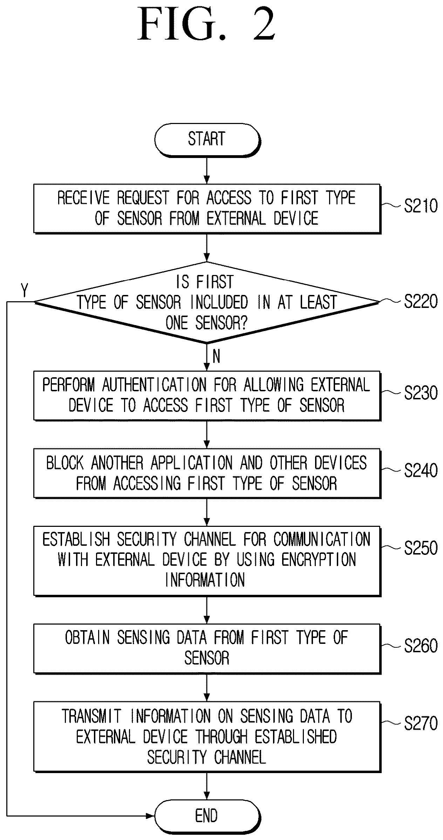

FIG. 1 is a block diagram briefly illustrating a configuration of an electronic apparatus 100 according to at least one embodiment of the present disclosure, and FIG. 2 is a flowchart briefly illustrating a method for controlling the electronic apparatus 100 according to at least one embodiment of the present disclosure. Hereinafter, various embodiments according to the present disclosure are described with reference to FIGS. 1 and 2.

The "electronic apparatus 100" refers to an apparatus capable of transmitting, to an external device 200, information on sensing data obtained from a sensor. In detail, the electronic apparatus 100 may allow the external device 200 to access the sensor and may transmit, to the external device 200, the information on the sensing data obtained from a sensor. For example, the electronic apparatus 100 may be an apparatus including a plurality of sensors such as a smartphone or a smartwatch, and is not limited to any particular type of apparatus.

The "external device 200" refers to an apparatus capable of receiving the information on the sensing data from the electronic apparatus 100. In detail, the external device 200 may request access to a sensor not included in the external device 200 and may receive the information on the sensing data from the electronic apparatus 100. The type of the external device 200 is not particularly limited either.

As illustrated in FIG. 1, the electronic apparatus 100 according to an embodiment of the present disclosure may include at least one sensor 110, a communication unit 120, a memory 130, and a processor 140.

At least one sensor 110 may detect various information inside and outside the electronic apparatus 100. In detail, the sensor may include at least one of a global positioning system (GPS) sensor, a gyro sensor (gyroscope), an acceleration sensor (accelerometer), a light detection and ranging (LiDAR) sensor, an inertial measurement unit (IMU), or a motion sensor. In addition, the sensor may include various types of sensors such as a temperature sensor, a humidity sensor, an infrared sensor, a fingerprint sensor, an iris recognition sensor, a heart rate sensor, and a blood pressure sensor. Furthermore, at least one sensor 110 may include an image sensor (i.e., a camera) and a voice sensor (i.e., a microphone).

In particular, in at least one embodiment, the processor 140 may obtain the sensing data from at least one sensor 110. For example, the processor 140 may obtain fingerprint data of a user from a fingerprint sensor, motion data corresponding to user movement from a motion sensor, image data from an image sensor, and a voice signal corresponding to a user voice from a voice sensor.

The communication unit 120 may include circuitry and may communicate with the external device 200. In detail, the processor 140 may receive various data or information from the external device 200 through the communication unit 120 and may transmit various data or information to the external device 200.

The communication unit 120 may include at least one of a wireless fidelity (Wi-Fi) module, a Bluetooth module, a wireless communication module, a near-field communication (NFC) module, or an ultra-wide band (UWB) module. In detail, each of the Wi-Fi module and the Bluetooth module may perform communication by using a Wi-Fi method or a Bluetooth method. When the Wi-Fi module or the Bluetooth module is used, the communication unit 120 may first transmit/receive various connection information such as a service set identifier (SSID), establish a communication link by using the same, and then transmit/receive various information.

In addition, the wireless communication module may perform communication according to various communication standards such as Institute of Electrical and Electronics Engineers (IEEE), Zigbee, third generation (3G), third generation partnership project (3GPP), long term evolution (LTE), and fifth generation (5G). The NFC module may perform communication by using a near-field communication (NFC) method using a frequency band of 13.56 MHz among various radio frequency identification (RF-ID) frequency bands (e.g., 135 kHz, 13.56 MHz, 433 MHz, 860-960 MHz, and 2.45 GHz). The UWB module may perform precise distance and position recognition within an error range of several centimeters indoors by accurately measuring Time of Arrival (ToA) and Angle of Arrival (AoA) through communication between UWB antennas.

In particular, in at least one embodiment, the processor 140 may receive a request for access to a first type of sensor from the external device 200 through the communication unit 120. The processor 140 may establish, through the communication unit 120, a security channel (or secure tunnel) for communication with the external device 200 by using encryption information. The processor 140 may control the communication unit 120 to transmit the information on the sensing data to the external device 200 through the established security channel. The processor 140 may also control the communication unit 120 to transmit, to the external device 200, a message indicating that the first type of sensor is not included in the electronic apparatus 100. In addition, the communication unit 120 may transmit and receive various data, information, and signals through the communication link between the electronic apparatus 100 and the external device 200.

The memory 130 may store at least one instruction related to the electronic apparatus 100. In addition, the memory 130 may store an operating system (OS) for driving the electronic apparatus 100. In addition, the memory 130 may store various software programs or applications for operating the electronic apparatus 100 according to various embodiments of the present disclosure. In addition, the memory 130 may include a semiconductor memory such as a flash memory, a magnetic storage medium such as a hard disk, or the like.

In detail, the memory 130 may store various software modules for operating the electronic apparatus 100 according to various embodiments of the present disclosure, and the processor 140 may execute the software modules stored in the memory 130 to control operations of the electronic apparatus 100. That is, the memory 130 may be accessed by the processor 140, and the processor 140 may perform reading, writing, modifying, deleting, updating, or the like of data.

Meanwhile, in the present disclosure, the term "memory 130" may refer to a concept including the memory 130, a read only memory (ROM) and a random access memory (RAM) inside the processor 140, or a memory card (e.g., a micro secure digital (SD) card or a memory stick) mounted on the electronic apparatus 100.

In particular, in at least one embodiment, the memory 130 may store various information such as information on each type of at least one sensor 110, sensing data obtained from at least one sensor 110, the information on the sensing data, and the encryption information for establishing a security channel with the external device 200.

In addition, the memory 130 may store various information necessary to achieve an object of the present disclosure, and the information stored in the memory 130 may be updated based on information received from the external device 200 or input by the user.

The processor 140 may control overall operations of the electronic apparatus 100. In detail, the processor 140 may be connected to at least one sensor 110, the communication unit 120, and the memory 130, and may control the overall operations of the electronic apparatus 100 by executing at least one instruction stored in the memory 130.

The processor 140 may be implemented in various forms. For example, the processor 140 may be implemented as at least one of an application specific integrated circuit (ASIC), an embedded processor, a microprocessor, hardware control logic, a hardware finite state machine (FSM), or a digital signal processor (DSP). Meanwhile, the term "processor" used in the present disclosure may include a central processing unit (CPU), a graphics processing unit (GPU), or a micro processor unit (MPU).

In particular, in at least one embodiment, the processor 140 may determine whether to allow the external device 200 to access a sensor included in the electronic apparatus 100, and may transmit the information on the sensing data to the external device 200 through the security channel. Hereinafter, various embodiments implemented by the processor 140 are described in detail with reference to FIG. 2.

Referring to FIG. 2, the processor 140 may receive a request for access to the first type of sensor from the external device 200 through the communication unit 120

(S210). Here, the term "request for access" refers not to a request for access to the electronic apparatus 100 itself but to a request for access to the first type of sensor included in the electronic apparatus 100. That is, the request for access may be regarded as a request for direct access, by the external device 200, to a function of the first type of sensor included in the electronic apparatus 100.

The request for access may be transmitted by the external device 200 based on an occurrence of an event for using the first type of sensor. For example, when an event for user authentication for payment occurs in the external device 200 that does not include a fingerprint sensor, the external device 200 may transmit the request for access to the electronic apparatus 100. In addition, when an event for using a motion sensor for user movement control occurs in the external device 200 that does not include the motion sensor, the external device 200 may transmit the request for access to the electronic apparatus 100.

The term "first type of sensor" is used to refer to a specific type of apparatus that the external device 200 desires to access. For example, the first type of sensor may refer to a sensor having a specific function, such as a "motion sensor", a "fingerprint sensor", or a "heart rate sensor", may refer to a sensor having a specific operating principle or use, such as an accelerometer or a temperature sensor, or may further refer, in detail, to a sensor having a particular specification among sensors having a specific function and use.

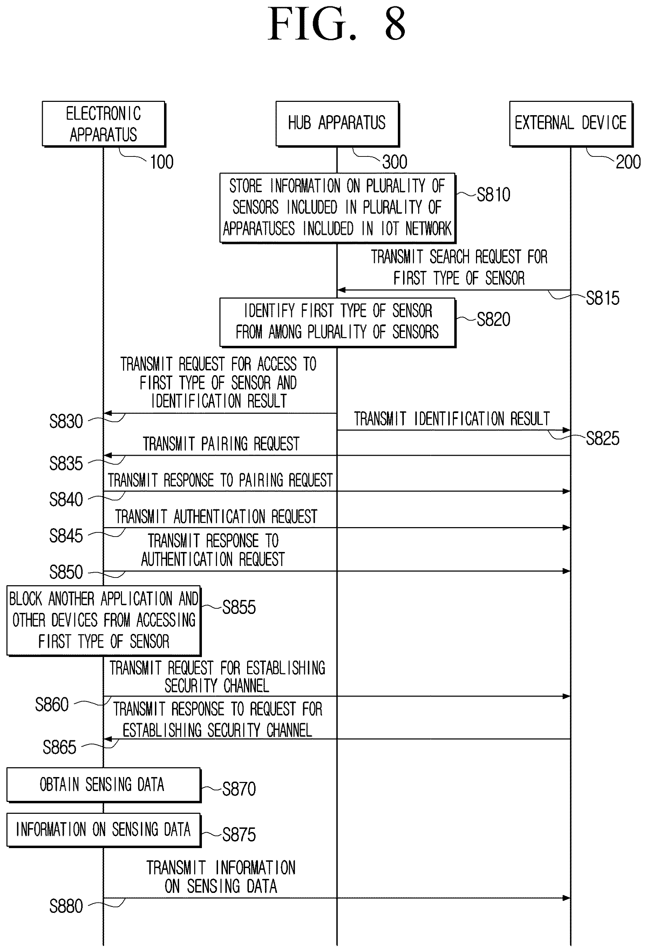

The processor 140 may receive the request for access to the first type of sensor directly from the external device 200 through the communication unit 120, or may receive the request for access through a hub apparatus 300. That is, when the external device 200 transmits the request for access to the hub apparatus 300, the hub apparatus 300 may transmit the request for access to the electronic apparatus 100. Here, the "hub apparatus 300" refers to a device for managing an Internet of Things (IoT) network including the electronic apparatus 100 and the external device 200. A system including the hub apparatus 300 is described in detail with reference to FIG. 8.

When the request for access to the first type of sensor is received, the processor 140 may identify whether the first type of sensor is included in at least one sensor 110 (S220). In detail, the processor 140 may identify whether the first type of sensor is included in at least one sensor 110 based on the information on each type of at least one sensor 110 stored in the memory 130.

A process of identifying whether the first type of sensor is included in at least one sensor 110 may be performed by the electronic apparatus 100 or by the hub apparatus 300. An embodiment in which the process of identifying whether the first type of sensor is included in at least one sensor 110 is performed by the hub apparatus 300 is described in detail with reference to FIG. 8.

When the first type of sensor is identified as not being included in at least one sensor 110 (S220-N), the processor 140 may terminate the operation of the electronic apparatus 100, and may also control the communication unit 120 to transmit, to the external device 200, the message indicating that the first type of sensor is not included in the electronic apparatus 100.

The processor 140 may perform authentication for allowing the external device 200 to access the first type of sensor (S230) when the first type of sensor is identified as being included in at least one sensor 110 (S220-Y).

In detail, the processor 140 may control the communication unit 120 to transmit an authentication request to the external device 200. Here, the term "authentication request" refers to a request for verifying whether the external device 200 has authorization to access a sensor included in the electronic apparatus 100.

When the authentication request is received, the external device 200 may display a user interface for receiving a user input in response to the authentication request. The user may input the user input by entering a predetermined password or by performing biometric authentication through the user interface. When the user input is received, the external device 200 may transmit a response to the authentication request to the electronic apparatus 100. When the electronic apparatus 100 receives the response to the authentication request from the external device 200, the authentication may be completed.

Meanwhile, when the authentication for the external device 200 is already performed, the external device 200 may transmit the response to the authentication request to the electronic apparatus 100 without receiving an additional user input.

The processor 140 may block another application and another device from accessing the first type of sensor (S240). Here, the term "another application" refers to an application excluding at least one application related to access to the first type of sensor by the external device 200 from among a plurality of applications of the electronic apparatus 100. In addition, the term "another device" refers to a device excluding the external device 200 that transmits the request for access to the first type of sensor.

That is, the processor 140 may block another application excluding at least one application related to access to the first type of sensor by the external device 200 from among the plurality of applications of the electronic apparatus 100 and another device excluding the external device 200 from accessing the first type of sensor.

"Blocking" another application and another device from accessing the first type of sensor may allow the external device 200 to exclusively access the first type of sensor, thereby smoothly maintaining transmission of the information on the sensing data to the external device 200 through the first type of sensor. Therefore, in the present disclosure, the expression "blocking access to the first type of sensor" may be replaced with expressions such as "partially disabling" or "isolating" the first type of sensor.

Meanwhile, the processor 140 may control the communication unit 120 to transmit, to another external device, a message indicating that the request for access to the first type of sensor is blocked when access to the first type of sensor is blocked and the request for access to the first type of sensor is subsequently received from another device.

Meanwhile, the blocking of access by another application and another device may be released based on reception, from the external device 200, of a request for stopping access to the first type of sensor by the external device 200, or based on reception of a user input for stopping the access to the first type of sensor by the external device 200.

The processor 140 may establish the security channel for communication with the external device 200 by using the encryption information (S250). In detail, the processor 140 may control the communication unit 120 to transmit a request for establishment of the security channel to the external device 200, and may establish the security channel by receiving, through the communication unit 120, a response to the request for establishment of the security channel from the external device 200.

Here, the term "encryption information" may collectively refer to information on cryptographic data used in various types of encryption schemes for establishing the security channel. In detail, the encryption information may include an asymmetric cipher for setting a session key related to establishment of the security channel and a symmetric block cipher for encrypting and decrypting the information on the sensing data.

For example, the encryption information may include information on a key used in symmetric key encryption, information on public and private keys used in public key encryption, block encryption information used in an advanced encryption standard (AES), a type of symmetric key encryption, and information related to a digital certificate, an authentication authority, or the like, used in Elliptic Curve Diffie-Hellman (ECDH) or public key infrastructure (PKI).

When the security channel is established, the processor 140 may encrypt data through the security channel and transmit the same to the external device 200, and the external device 200 that receives the encrypted data may decrypt the encrypted data.

The processor 140 may obtain the sensing data from the first type of sensor (S260). In addition, the processor 140 may control the communication unit 120 to transmit the information on the sensing data to the external device 200 through the established security channel (S270). In detail, the processor 140 may obtain the sensing data from the first type of sensor after establishment of the security channel, or may periodically obtain the sensing data for a predetermined period even before the security channel is established and transmit the information on the sensing data to the external device 200 after the security channel is established.

In the present disclosure, the term "the information on the sensing data" is used as a term for collectively referring to various types of information related to sensing data. That is, the term includes the sensing data itself (i.e., raw data) and is used in a broader sense. In detail, the information on the sensing data may include at least one of sensing data, processed data obtained from the sensing data, an analysis result of the sensing data, or control information for performing an operation related to the sensing data.

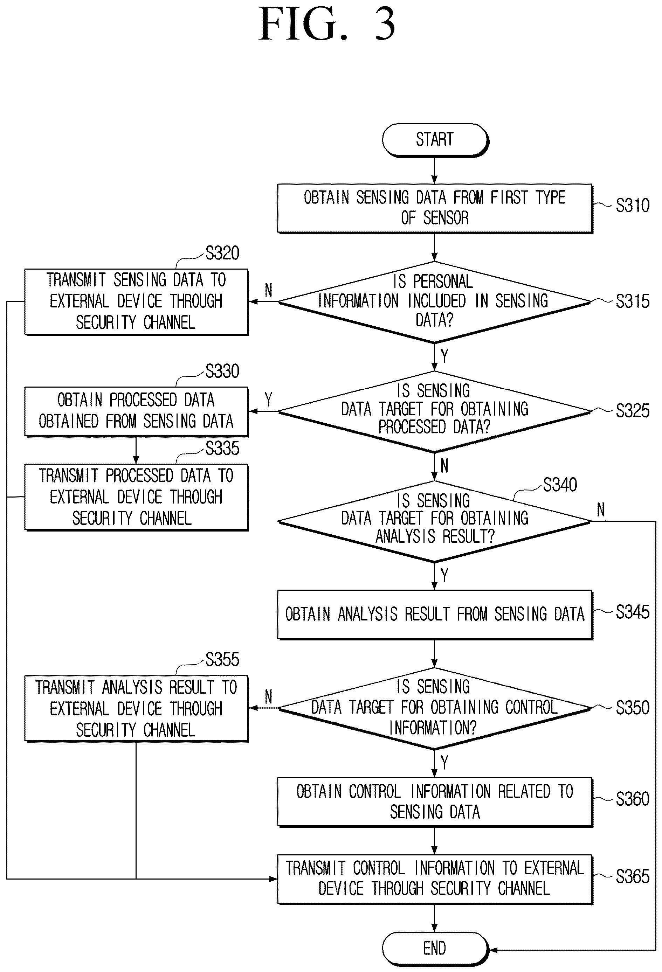

The type of information among the information on the sensing data is to be obtained and transmitted by the electronic apparatus 100 to the external device 200 may vary depending on an embodiment. In detail, when the sensing data is obtained from the first type of sensor, the processor 140 may control the communication unit 120 to transmit the sensing data itself to the external device 200, or may obtain at least one of the processed data obtained from the sensing data, the analysis result of the sensing data, or the control information for performing an operation related to the sensing data, and control the communication unit 120 to transmit the obtained information to the external device 200. Various embodiments for obtaining and transmitting the information on the sensing data are described in detail with reference to FIGS. 3 to 6.

According to the embodiment described above with reference to FIGS. 1 and 2, the electronic apparatus 100 may determine whether to allow the external device 200 to access a sensor included in the electronic apparatus 100, and may stably and exclusively transmit the information on the sensing data to the external device 200 while protecting personal information through the security channel.

In addition, usability and stability of sharing sensor functions among apparatuses included in the IoT network may be enhanced, thereby providing a stronger IoT ecosystem. In detail, one apparatus may smoothly and simultaneously use a plurality of sensors included in another device, thereby providing new options available in the IoT network and significantly improving user experience. Furthermore, according to the present disclosure, the number of sensors mounted on IoT devices may be reduced, thereby contributing to the weight reduction and design simplification of the IoT devices.

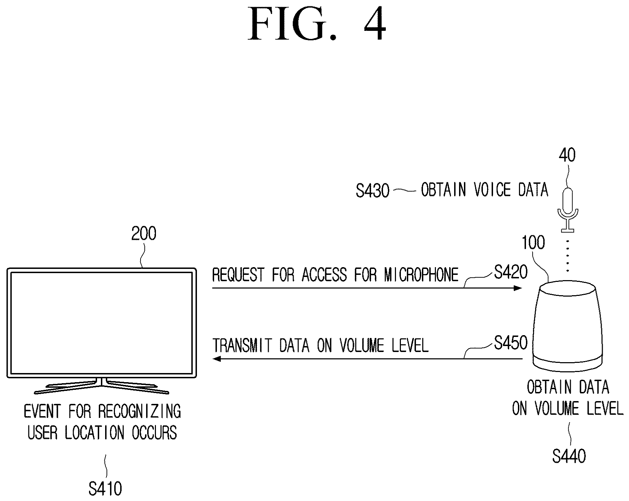

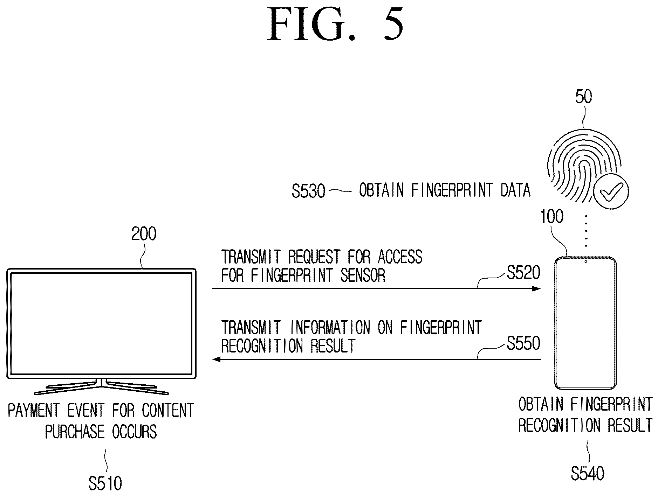

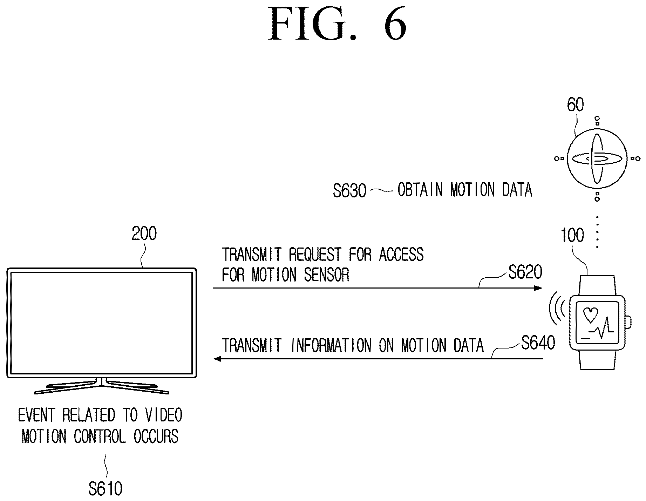

FIG. 3 is a flowchart illustrating various embodiments related to a method for obtaining and transmitting the information on the sensing data; FIG. 4 is a diagram illustrating an embodiment for transmitting the sensing data itself; FIG. 5 is a diagram illustrating an embodiment for transmitting the analysis result of the sensing data; and FIG. 6 is a diagram illustrating an embodiment for transmitting the processed data obtained from the sensing data. Hereinafter, various embodiments according to the present disclosure are described with reference to FIGS. 3 to 6.

As described above with reference to FIG. 2, the processor 140 may obtain the sensing data from the first type of sensor (S260), and may transmit the information on the sensing data to the external device 200 through the established security channel (S270). Hereinafter, various embodiments related to obtaining the information on the sensing data are described. The process between receiving a request for access and establishing a security channel between the electronic apparatus 100 and the external device 200 is described with reference to FIG. 2, and this process is thus omitted in the following descriptions provided with reference to FIGS. 3 to 6.

Referring to FIG. 3, when the sensing data is obtained from the first type of sensor (S310), the processor 140 may identify whether the personal information is included in the sensing data (S320). In detail, the processor 140 may identify whether the sensing data obtained from the first type of sensor includes the personal information based on information on a type of the first type of sensor.

For example, when the first type of sensor is highly likely to include personal information related to privacy in the sensing data obtained therefrom, the processor 140 may identify that the personal information is included in the sensing data obtained from the first type of sensor.

When the sensing data is identified as not including the personal information (S315-N), the processor 140 may transmit the sensing data to the external device 200 through the security channel (S320). On the other hand, when the sensing data is identified as including the personal information (S315-Y), the processor 140 may identify whether the sensing data is a target for obtaining the processed data (S325). In detail, the processor 140 may identify whether the sensing data obtained from the first type of sensor is the target for obtaining the processed data based on the information on the type of the first type of sensor.

When the sensing data is identified as being the target for obtaining the processed data (S325-Y), the processor 140 may obtain the processed data obtained from the sensing data (S330) and may transmit the processed data to the external device 200 through the security channel (S335).

In detail, the processor 140 may obtain the processed data obtained from the sensing data by converting the sensing data not to include the personal information. When the processed data is obtained by conversion, the processor 140 may control the communication unit 120 to transmit, to the external device 200 through the established security channel, only the processed data among the information on the sensing data.

An example illustrated in FIG. 4 shows that the electronic apparatus 100 is implemented as an artificial intelligence speaker including a voice sensor 40 (i.e., a microphone), and the external device 200 is implemented as a television (TV). Referring to FIG. 4, an event for recognizing a user location may occur in the external device 200 (S410). The external device 200 may transmit, to the electronic apparatus 100, a request for access for the voice sensor 40 included in the electronic apparatus 100 based on the occurrence of the event for recognizing the user location (S420).

The processor 140 may obtain voice data corresponding to the user voice, which is a type of sensing data, through the voice sensor 40 (S430). When the voice data is obtained, the processor 140 may obtain data on a volume level of the user voice, which is a type of processed data, by converting (or preprocessing) the voice data not to include the personal information (S440). When the data on the volume level is obtained, the processor 140 may control the communication unit 120 to transmit the data on the volume level to the external device 200 through the security channel (S450).

Accordingly, the electronic apparatus 100 may protect the personal information of the user by transmitting only the data on the volume level after removing the personal information, instead of transmitting the voice data itself, which corresponds to the user voice having a high level of personal information. The external device 200 may use the data on the volume level for recognizing the user location.

When the sensing data is identified as not being the target for obtaining the processed data (S325-N), the processor 140 may identify whether the sensing data is the target for obtaining the analysis result (S340). In detail, the processor 140 may identify whether the sensing data obtained from the first type of sensor is the target for obtaining the analysis result based on the information on the type of the first type of sensor.

When the sensing data is identified as being the target for obtaining the analysis result as an identification result (S340-Y), the processor 140 may obtain the analysis result of the sensing data (S345). In addition, the processor 140 may identify whether the sensing data is the target for obtaining the control information (S350).

In detail, when the sensing data is identified as being the target for obtaining the analysis result, the processor 140 may obtain the analysis result by performing a predefined type of analysis on the sensing data.

The type of analysis to be performed on the sensing data may be predefined based on the type of sensor or the type of sensing data. For example, when the sensing data is the fingerprint data, the analysis result may be an analysis result regarding whether the fingerprint data obtained from a fingerprint sensor 50 matches pre-registered fingerprint data, and when the sensing data is blood pressure data, the analysis result may be an analysis result regarding whether the blood pressure data obtained from the blood pressure sensor falls within a predefined blood pressure range.

When the analysis result is obtained, the processor 140 may identify whether the sensing data obtained from the first type of sensor is the target for obtaining the control information based on the information on the type of the first type of sensor.

When the sensing data is identified as not being the target for obtaining the control information (S350-N), the processor 140 may transmit the analysis result to the external device 200 through the security channel (S355). That is, when the sensing data is the target for obtaining the analysis result but not the target for obtaining the control information, the processor 140 may control the communication unit 120 to transmit, to the external device 200 through the established security channel, only the analysis result among the information on the sensing data.

An example illustrated in FIG. 5 shows that the electronic apparatus 100 is implemented as a smartphone including the fingerprint sensor 50, and the external device 200 is implemented as a TV. Referring to FIG. 5, a payment event for content purchase may occur in the external device 200 (S510). The external device 200 may transmit a request for access for the fingerprint sensor 50 included in the electronic apparatus 100 to the electronic apparatus 100 based on the occurrence of the payment event (S520).

The processor 140 may obtain the fingerprint data of the user, which is a type of sensing data, through the fingerprint sensor 50 (S530). When the fingerprint data is obtained, the processor 140 may obtain a fingerprint recognition result, which is a type of analysis result, by identifying whether the fingerprint data obtained from the fingerprint sensor 50 matches the pre-registered fingerprint data (S540). When the fingerprint recognition result is obtained, the processor 140 may control the communication unit 120 to transmit the fingerprint recognition result to the external device 200 through the security channel (S550).

Accordingly, the electronic apparatus 100 may protect the personal information of the user by transmitting, to the external device 200, only the analysis result from the fingerprint data instead of transmitting the fingerprint data itself, which has a high level of personal information. The external device 200 may use the analysis result from the fingerprint data for the payment for content purchase.

Meanwhile, when the sensing data is identified as being the target for obtaining the control information (S355-Y), the processor 140 may obtain the control information related to the sensing data (S360). In addition, the processor 140 may transmit the control information to the external device 200 through the security channel (S365).

In detail, when the sensing data is identified as being the target for obtaining the control information, the processor 140 may obtain the control information based on the analysis result of the sensing data.

The type of control information to be obtained based on the analysis result may be predefined based on the type of sensor or the type of sensing data. For example, when the analysis result indicates that the fingerprint data obtained from the fingerprint sensor 50 matches the pre-registered fingerprint data, the processor 140 may obtain control information requesting completion of the user authentication. In addition, when the analysis result indicates that the blood pressure data obtained from the blood pressure sensor falls within the predefined range, the processor 140 may obtain control information for outputting a warning message to the user regarding hypertension.

When the control information is obtained, the processor 140 may control the communication unit 120 to transmit, to the external device 200 through the security channel, only the control information among the information on the sensing data, or may control the communication unit 120 to transmit, through the security channel, both the analysis result and the control information.

An example illustrated in FIG. 6 shows that the electronic apparatus 100 is implemented as a smartwatch including a motion sensor 60, and the external device 200 is implemented as a TV. Referring to FIG. 6, an event related to video motion control may occur in the external device 200 (S610). The external device 200 may transmit a request for access for the motion sensor 60 included in the electronic apparatus 100 to the electronic apparatus 100 based on the occurrence of the event related to the video motion control (S620). Here, the "event related to the video motion control" may be an event for controlling a video displayed on the external device 200 based on a user motion (or movement), such as rotating and displaying a 360-degree video based on the user motion.

The processor 140 may obtain the motion data, which is a type of sensing data representing the user movement, through the motion sensor 60 (S630). When the motion data is obtained, the processor 140 may control the communication unit 120 to transmit the motion data to the external device 200 through the security channel (S640).

Accordingly, when the motion data, which has a relatively low level of personal information, is obtained, the electronic apparatus 100 may quickly transmit the motion data itself to the external device 200 without obtaining the processed data, the analysis result, or the control information on the motion data. The external device 200 may perform real-time video motion control based on the motion data.

Meanwhile, FIGS. 4 to 6 illustrate the embodiments in which the external device 200 accesses the first type of sensor included in the electronic apparatus 100 and not included in the external device 200. However, in some embodiments, even when the external device 200 includes the first type of sensor, the external device 200 may access the first type of sensor included in the electronic apparatus 100 to utilize two or more sensors of the same type.

Meanwhile, the embodiments described with reference to FIGS. 3 to 6 are merely illustrative, and the respective steps illustrated in FIGS. 3 to 6 may be performed in different orders or combined in different ways. For example, the electronic apparatus 100 may obtain both the analysis result and the control information related to the sensing data even when the sensing data is the target for obtaining processed data. In addition, in the embodiments illustrated in FIGS. 3 to 6, the electronic apparatus 100 is described as selectively transmitting one of the sensing data, the processed data, the analysis result, and the control information to the external device 200. However, the electronic apparatus 100 may transmit one or more of the sensing data, the processed data, the analysis result, and the control information to the external device 200.

According to the embodiments described above with reference to FIGS. 3 to 6, the electronic apparatus 100 may transmit information appropriate for the type of sensing data to the external device while protecting the personal information included in the sensing data based on the information on the type of the first type of sensor.

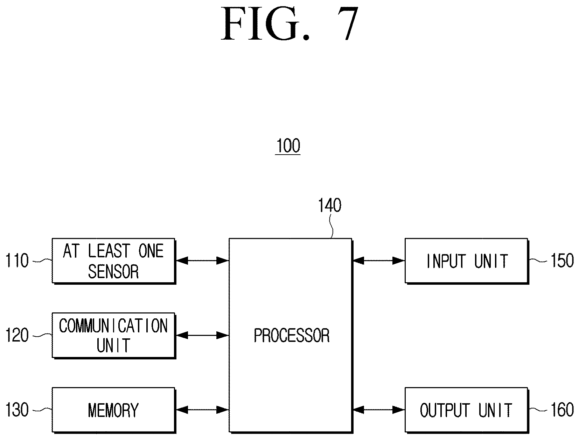

FIG. 7 is a block diagram illustrating a detailed configuration of the electronic apparatus 100 according to at least one embodiment of the present disclosure.

As illustrated in FIG. 7, the electronic apparatus 100 according to an embodiment of the present disclosure may further include an input unit 150 and an output unit 160 in addition to at least one sensor 110, the communication unit 120, the memory 130, and the processor 140. However, the configurations illustrated in FIGS. 1 and 7 are merely illustrative, and additional configurations may be added or some configurations may be omitted in implementing the present disclosure in addition to those illustrated in FIGS. 1 and 7.

The input unit 150 may include circuitry, and the processor 140 may receive a user command for controlling the operation of the electronic apparatus 100 through the input unit 150. In detail, the input unit 150 may include a component such as a microphone, a camera, or a remote-control signal receiver. In addition, the input unit 150 may be implemented as a touch screen included in a display. In particular, the microphone may receive a voice signal and convert the received voice signal into an electrical signal.

In particular, in at least one embodiment, the processor 140 may receive, through the input unit 150, a user input for selecting at least one sensor among at least one sensor 110 to which access of the external device 200 is to be allowed. The processor 140 may receive, through the input unit 150, a user input for stopping access of the external device 200 to the first type of sensor. In addition, the processor 140 may receive, through the input unit 150, a user input for starting, stopping, or terminating an operation according to the present disclosure.

The output unit 160 may include circuitry, and the processor 140 may output, through the output unit 160, various functions performable by the electronic apparatus 100. In addition, the output unit 160 may include at least one of a display, a speaker, or an indicator.

The display may output image data under control of the processor 140. In detail, the display may output an image pre-stored in the memory 130 under the control of the processor 140.

In particular, the display according to an embodiment of the present disclosure may display a user interface (UI) stored in the memory 130. The display may be implemented as a liquid crystal display (LCD) panel or an organic light-emitting diode (OLED) display panel. In addition, in some cases, the display may be implemented as a flexible display, a transparent display, or the like. However, the display according to the present disclosure is not limited to any specific type.

The speaker may output audio data under the control of the processor 140, and an indicator may be turned on under the control of the processor 140.

In particular, in at least one embodiment, the processor 140 may control the output unit 160 to output a message indicating that the authentication for allowing the external device 200 to access the first type of sensor is completed, or a message indicating that access of the external device 200 to the first type of sensor is stopped.

In addition, the processor 140 may control the output unit 160 to output a message indicating that the request for access to the first type of sensor is blocked when access to the first type of sensor is blocked and the request for access to the first type of sensor is subsequently received from another application.

FIG. 8 is a sequence diagram illustrating an embodiment for identifying the sensor through the hub apparatus 300.

Hereinabove, the description describes the various embodiments according to the present disclosure implemented through a system including the electronic apparatus 100 and the external device 200. However, the present disclosure is not limited thereto, and the system according to the present disclosure may further include the hub apparatus 300 in addition to the electronic apparatus 100 and the external device 200.

Here, the "hub apparatus 300" refers to an apparatus for managing the IoT (Internet of Things) network including the electronic apparatus 100 and the external device 200. The electronic apparatus 100 and the external device 200 may be apparatuses registered as apparatuses included in the IoT network, and the hub apparatus 300 may serve as a central point that allows the apparatuses registered in the IoT network, including the electronic apparatus 100 and the external device 200, to interact with each other while exchanging data. For example, the hub apparatus 300 may perform various functions such as collecting and transferring data, monitoring and controlling the apparatuses registered in the IoT network, preprocessing data, and providing warnings and notifications.

Referring to FIG. 8, the hub apparatus 300 may store information on a plurality of sensors included in a plurality of apparatuses included in the IoT network (S810). Here, the "information on the plurality of sensors" may include information on types of the plurality of sensors included in the plurality of apparatuses included in the IoT network and identification information of the apparatuses including the respective sensors.

The external device 200 may transmit a search request for the first type of sensor to the hub apparatus 300 (S815). When the search request is received, the hub apparatus 300 may identify the first type of sensor from among the plurality of sensors (S820).

In detail, when the search request for the first type of sensor is received from the external device 200, the hub apparatus 300 may identify the first type of sensor from among the plurality of sensors based on the information on the plurality of sensors, and may identify the electronic apparatus 100 as an apparatus including the first type of sensor from among the plurality of apparatuses. In other words, the hub apparatus 300 may perform a function of enumerating and selecting the plurality of sensors included in the IoT network.

When the first type of sensor and the electronic apparatus 100 are identified, the hub apparatus 300 may transmit, to the electronic apparatus 100, the request for access to the first type of sensor and the identification result (S830). In addition, the hub apparatus 300 may transmit the identification result to the external device 200 (S825).

In detail, when the first type of sensor and the electronic apparatus 100 are identified, the hub apparatus 300 may transmit, to the electronic apparatus 100, the request for access to the first type of sensor and the identification result for the first type of sensor. Accordingly, the processor 140 may identify whether the first type of sensor is included in at least one sensor 110 by receiving, from the hub apparatus 300 through the communication unit 120, information on whether the first type of sensor is included in at least one sensor 110.

When the identification result is received from the hub apparatus 300, the external device 200 may transmit a pairing request to the electronic apparatus 100 (S835), and the electronic apparatus 100 may transmit a response to the pairing request to the external device 200 (S840). Accordingly, pairing between the electronic apparatus 100 and the external device 200 may be completed.

The electronic apparatus 100 may transmit the authentication request to the external device 200 (S845), and the external device 200 may transmit the response to the authentication request to the electronic apparatus 100 (S850). In detail, when the authentication request is received, the external device 200 may display the user interface for receiving the user input in response to the authentication request. In addition, the user may input the user input by entering a predetermined password or performing biometric authentication through the user interface. When the user input is received, the external device 200 may transmit the response to the authentication request to the electronic apparatus 100, and the authentication may be completed when the electronic apparatus 100 receives the response to the authentication request from the external device 200.

Meanwhile, when the authentication for the external device 200 is already performed, the external device 200 may transmit the response to the authentication request to the electronic apparatus 100 without receiving an additional user input.

When the authentication is completed, the electronic apparatus 100 may block another application and another device from accessing the first type of sensor (S855). In detail, the electronic apparatus 100 may block another application excluding at least one application related to access to the first type of sensor by the external device 200 from among the plurality of applications of the electronic apparatus 100 and another device excluding the external device 200 from accessing the first type of sensor.

Blocking another application and another device from accessing the first type of sensor may allow the external device 200 to exclusively access the first type of sensor, thereby maintaining transmission of the information on the sensing data to the external device 200 through the first type of sensor in a seamless manner.

After access of another application and another device to the first type of sensor is blocked, the electronic apparatus 100 may transmit the request for establishing the security channel to the external device 200 (S860), and the external device 200 may transmit a response to the request for establishing the security channel (S865). Accordingly, the security channel may be established.

In detail, the encryption information may include the asymmetric cipher for setting the session key related to establishment of the security channel and the symmetric block cipher for encrypting and decrypting the information on the sensing data.

The electronic apparatus 100 may obtain the sensing data (S870) and may obtain the information on the sensing data (S875). In addition, the electronic apparatus 100 may transmit the information on the sensing data (S880). Here, the information on the sensing data may include at least one of the sensing data, the processed data obtained from the sensing data, the analysis result of the sensing data, or the control information for performing the operation related to the sensing data.

The electronic apparatus 100 may obtain the sensing data from the first type of sensor and may obtain the information on the sensing data based on the information on the type of the first type of sensor.

When the sensing data is obtained from the first type of sensor, the processor 140 may control the communication unit 120 to transmit the sensing data itself to the external device 200, or may obtain at least one of the processed data obtained from the sensing data, the analysis result of the sensing data, or the control information for performing the operation related to the sensing data, and control the communication unit 120 to transmit the obtained information to the external device 200.

In addition to the above-described operations, the hub apparatus 300 may perform various operations such as transmitting and receiving data between the electronic apparatus 100 and the external device 200, or mediating and transmitting requests and responses for communication between the electronic apparatus 100 and the external device 200.

Meanwhile, the method for controlling the electronic apparatus 100 according to the above-described embodiment may be implemented as a program and provided to the electronic apparatus 100. In particular, the program including the method for controlling the electronic apparatus 100 may be stored and provided in a non-transitory computer readable medium.

In detail, in the non-transitory computer-readable recording medium including a program for executing the method for controlling the electronic apparatus 100, the method for controlling the electronic apparatus 100 may include: receiving the request for access to the first type of sensor from the external device 200; identifying whether the first type of sensor is included in at least one sensor 110; performing the authentication for allowing the external device 200 to access the first type of sensor when the first type of sensor is identified as being included in at least one sensor 110; blocking another application excluding at least one application related to access to the first type of sensor by the external device 200 from among the plurality of applications of the electronic apparatus 100 and another device excluding the external device 200 from accessing the first type of sensor; establishing the security channel for communication with the external device 200 by using the encryption information; and transmitting, to the external device 200 through the established security channel, the information on the sensing data when the sensing data is obtained from the first type of sensor.

Hereinabove, the method for controlling the electronic apparatus 100 and the computer-readable recording medium including the program for executing the method for controlling the electronic apparatus 100 are briefly described, only to omit redundant descriptions thereof, and the various embodiments regarding the electronic apparatus 100 may also be applied to the method for controlling the electronic apparatus 100 and the computer-readable recording medium including the program for executing the method for controlling the electronic apparatus 100.

A machine-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored.

According to an embodiment, the methods according to the various embodiments disclosed in the present disclosure may be included and provided in a computer program product. The computer program product may be traded as a commodity between a seller and a purchaser. The computer program product may be distributed in a form of the machine-readable storage medium (e.g., a compact disc read only memory (CD-ROM)), or may be distributed online (e.g., by download or upload) via an application store (e.g., PlayStore^{™}) or directly between two user devices (e.g., smartphones). In case of the online distribution, at least a part of the computer program product (e.g., downloadable app) may be at least temporarily stored or temporarily provided in the machine-readable storage medium such as a server memory of a manufacturer, a server memory of an application store, or a relay server memory 130.

Each of components (e.g., modules or programs) according to the various embodiments of the present disclosure as described above may include a single entity or a plurality of entities, and some of the corresponding sub-components described above may be omitted or other sub-components may be further included in the various embodiments. Alternatively or additionally, some of the components (e.g., the modules or the programs) may be integrated into one entity, and may perform functions performed by the respective corresponding components before being integrated in the same or similar manner.

Operations performed by the modules, the programs or other components according to the various embodiments may be executed in a sequential manner, a parallel manner, an iterative manner or a heuristic manner, at least some of the operations may be performed in a different order or be omitted, or other operations may be added.

Meanwhile, the term "~er/~or" or "module" used in the present disclosure may include a unit including hardware, software or firmware, and may be used interchangeably with the term, for example, a logic, a logic block, a component or a circuit. The "~er/~or" or "module" may be an integrally formed component, or a minimum unit or part performing one or more functions. For example, the module may include an application-specific integrated circuit (ASIC).

The various embodiments of the present disclosure may be implemented as software including an instruction stored in a machine-readable storage medium that may be read by a machine (e.g., computer). The machine may be an apparatus that invokes the stored instruction from the storage medium, may be operated based on the invoked instruction, and may include the electronic apparatus (e.g., the electronic apparatus 100) according to the disclosed embodiments.

When the instruction is executed by the processor, the processor may directly perform a function corresponding to the instruction, or perform the function by using other components under control of the processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:
at least one sensor;
a communication unit;
a memory storing at least one instruction; and
a processor configured to execute the at least one instruction,
wherein the processor is configured to:
identify whether a first type of sensor is included in the at least one sensor when a request for access to the first type of sensor is received from an external device through the communication unit;
perform authentication for allowing the external device to access the first type of sensor when the first type of sensor is identified as being included in the at least one sensor;
block another application excluding at least one application related to access to the first type of sensor by the external device from among a plurality of applications of the electronic apparatus and another device excluding the external device from accessing the first type of sensor;
establish a security channel for communication with the external device by using encryption information; and
control the communication unit to transmit, to the external device through the established security channel, information on sensing data when the sensing data is obtained from the first type of sensor.

2. The electronic apparatus as claimed in claim 1, wherein the information on the sensing data includes at least one of the sensing data, processed data obtained from the sensing data, an analysis result of the sensing data, or control information for performing an operation related to the sensing data.

3. The electronic apparatus as claimed in claim 2, wherein the processor is configured to:
identify whether personal information is included in the sensing data;
obtain the processed data obtained from the sensing data by converting the sensing data not to include the personal information when the personal information is identified as being included in the sensing data; and
control the communication unit to transmit, to the external device through the established security channel, the processed data among the information on the sensing data.

4. The electronic apparatus as claimed in claim 2, wherein the processor is configured to:
obtain the analysis result of the sensing data; and
control the communication unit to transmit, to the external device through the established security channel, the analysis result among the information on the sensing data.

5. The electronic apparatus as claimed in claim 4, wherein the processor is configured to:
obtain the control information based on the analysis result; and
control the communication unit to transmit, to the external device through the established security channel, the control information among the information on the sensing data.

6. The electronic apparatus as claimed in claim 1, wherein the processor is configured to:
receive, through the communication unit, the request for access from a hub apparatus for managing an Internet of Things (IoT) network including the electronic apparatus and the external device; and
identify whether the first type of sensor is included in the at least one sensor by receiving, from the hub apparatus through the communication unit, information indicating that the first type of sensor is included in the at least one sensor.

7. The electronic apparatus as claimed in claim 1, wherein the encryption information includes an asymmetric cipher for setting a session key related to establishment of the security channel and a symmetric block cipher for encrypting and decrypting the information on the sensing data.

8. The electronic apparatus as claimed in claim 1, wherein the processor is configured to:
control the communication unit to transmit, to the external device, a message indicating that the first type of sensor is not included in the electronic apparatus when the first type of sensor is identified as not being included in the at least one sensor.

9. The electronic apparatus as claimed in claim 1, wherein the processor is configured to:
control the communication unit to transmit, to another external device, a message indicating that the request for access to the first type of sensor is blocked when access to the first type of sensor is blocked and the request for access to the first type of sensor is subsequently received from the another device.

10. The electronic apparatus as claimed in claim 1, further comprising an output unit,
wherein the processor is configured to:
control the output unit to output a message indicating that the request for access to the first type of sensor is blocked when access to the first type of sensor is blocked and the request for access to the first type of sensor is subsequently received from the another application.

11. A method for controlling an electronic apparatus, the controlling method comprising:
receiving a request for access to a first type of sensor from an external device;
identifying whether the first type of sensor is included in at least one sensor;
performing authentication for allowing the external device to access the first type of sensor when the first type of sensor is identified as being included in the at least one sensor;
blocking another application excluding at least one application related to access to the first type of sensor by the external device from among a plurality of applications of the electronic apparatus and another device excluding the external device from accessing the first type of sensor;
establishing a security channel for communication with the external device by using encryption information; and
transmitting, to the external device through the established security channel, information on sensing data when the sensing data is obtained from the first type of sensor.

12. The controlling method as claimed in claim 11, wherein the information on the sensing data includes at least one of the sensing data, processed data obtained from the sensing data, an analysis result of the sensing data, or control information for performing an operation related to the sensing data.

13. The controlling method as claimed in claim 12, further comprising:
identifying whether personal information is included in the sensing data;
obtaining the processed data obtained from the sensing data by converting the sensing data not to include the personal information when the personal information is identified as being included in the sensing data; and
transmitting, to the external device through the established security channel, the processed data among the information on the sensing data.

14. The controlling method as claimed in claim 12, further comprising:
obtaining the analysis result of the sensing data; and
transmitting, to the external device through the established security channel, the analysis result among the information on the sensing data.

15. The controlling method as claimed in claim 14, further comprising:
obtaining the control information based on the analysis result; and
transmitting, to the external device through the established security channel, the control information among the information on the sensing data.
